# EUROPÄISCHE PATENTSCHRIFT

(11) **EP 4 562 700 B1**
(45) Veröffentlichungstag und Bekanntmachung des Hinweises auf die Patenterteilung: **18.11.2026**
(21) Anmeldenummer: 23757839.8
(22) Anmeldetag: 07.08.2023
(51) Int. Cl.: H01M 8/04186, H01M 8/18

(54) **REDOX-FLOW BATTERIE UND VERFAHREN ZUM BETRIEB**
REDOX FLOW BATTERY AND METHOD FOR OPERATING SAME
BATTERIE REDOX ET PROCÉDÉ DE FONCTIONNEMENT

(30) Priorität: 16.09.2022 DE 102022123821
(43) Veröffentlichungstag der Anmeldung: 04.06.2025
(73) Patentinhaber: Liva Power Management Systems GmbH, 65926 Frankfurt am Main (DE)
(72) Erfinder: LÜTH, Thomas, 79104 Freiburg (DE); HÄTTICH, Christian, 79117 Freiburg (DE); LI, Yifeng, 89555 Steinheim (DE)
(74) Vertreter: Fuchs Patentanwälte Partnerschaft mbB
(86) Internationale Anmeldenummer: PCT/EP2023/071769
(87) Internationale Veröffentlichungsnummer: WO 2024/056281

(56) Entgegenhaltungen:
- EP-B1- 2 297 810
- EP-B1- 2 932 548
- US-A1- 2022 285 709

## Beschreibung

Die Erfindung betrifft eine Redox-Flow Batterie mit einer Messeinrichtung zur Bestimmung des Ladezustandes und ein Verfahren zum Betrieb der Redox-Flow Batterie. Bei der Redox-Flow Batterie handelt es sich vorzugsweise um eine Batterie auf der Basis von Vanadium. Es kann sich jedoch auch um Batterien mit anders zusammengesetzten Elektrolyten handeln.

Zur Bestimmung des Ladezustandes (SoC - State of Charge) einer Redox-Flow Batterie kommen in der Regel elektrochemische Messzellen zum Einsatz, mit denen die Leerlaufspannung (OCV - Open Circuit Voltage) der Batterie gemessen werden kann. Die Verwendung solcher Messzellen offenbart beispielsweise die DE 10 2020 115 385 B3. Eine solche Messzelle umfasst zwei Kammern, welche durch einen sogenannten Separator bzw. einer Membran voneinander getrennt werden. In jeder Kammer ist eine Elektrode angeordnet, zwischen welchen das Messsignal abgegriffen wird. Die Kammern der Messzelle sind mit dem Elektrolytkreislauf der Batterie verbunden, so dass Elektrolyt durch die Kammern strömen kann.

Die Aufgabe der Erfindung ist es, eine alternative Anordnung zur wenigstens näherungsweisen Bestimmung des SoC einer Redox-Flow Batterie anzugeben, wobei keine elektrochemische Messzelle benötigt wird.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1:: Erfindungsgemäße Redox-Flow Batterie
- Fig.1a:: Erfindungsgemäße Varianten der hydraulischen Verbindungsleitung
- Fig.2:: Erfindungsgemäße Anordnung von Elektroden
- Fig.3:: Weitere erfindungsgemäße Anordnung von Elektroden

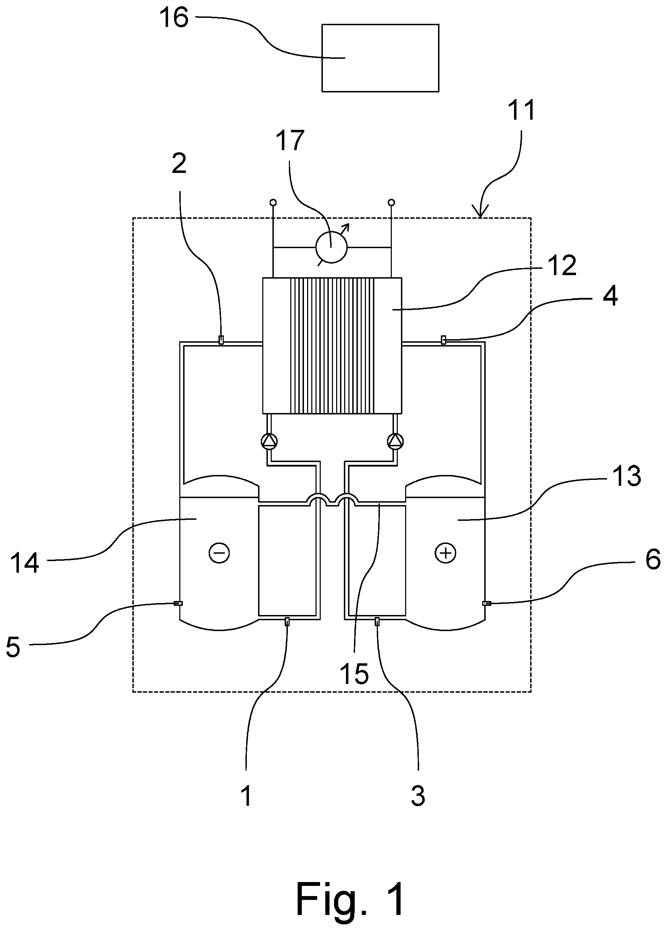

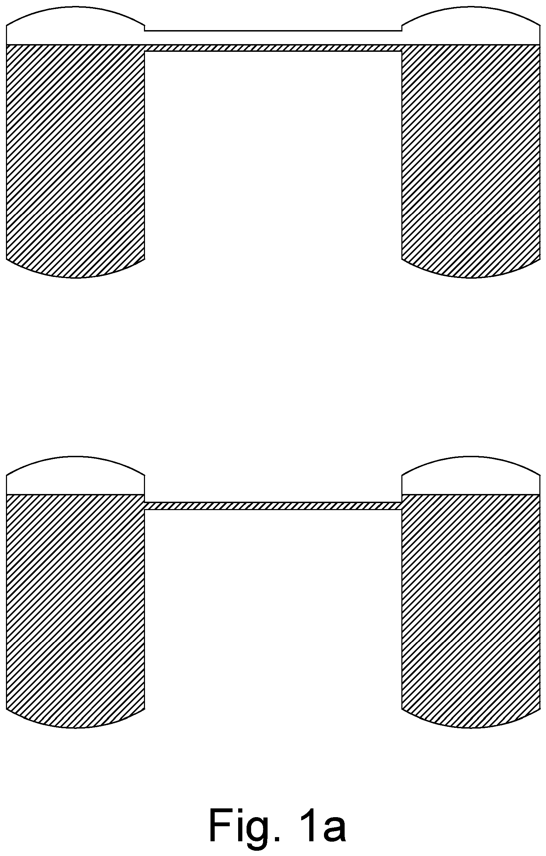

Figur 1 zeigt eine Redox-Flow Batterie, welche mit 11 bezeichnet ist. Die Batterie umfasst eine Zellanordnung, welche mit 12 bezeichnet ist. Bei der Zellanordnung 12 handelt es sich um eine Anordnung von einer Vielzahl von Redox-Flow-Zellen, welche beliebig angeordnet sein können. Beispielsweise könnte es sich um einen einzelnen Zell-Stack, eine Serienschaltung von mehreren Stacks, eine Parallelschaltung von mehreren Stacks, oder um eine Kombination von Serien- und Parallelschaltung von mehreren Stacks handeln. Die Batterie 11 umfasst zwei Tanks zum Speichern von Elektrolyten. Die Tanks sind mit 13 und 14 bezeichnet. Die in den Tanks 13 und 14 eingezeichneten Plus- und Minuszeichen deuten dabei die Polarität des im jeweiligen Tank befindlichen Elektrolyten an.

Während dem Betrieb einer solchen Batterie 11 wird Elektrolyt aus jedem der beiden Tanks 13 und 14 der Zellanordnung 12 zugeführt. Dabei bildet jeweils ein Tank 13 oder 14 und ein Rohrsystem zwischen dem betreffenden Tank und je einem Eingang der Zellanordnung 12 je ein Zuführungssystem für Elektrolyt. In analoger Weise bildet ein Rohrsystem zwischen einem Ausgang der Zellanordnung 12 und einem Tank ein Abführungssystem für Elektrolyt. Eine Batterie 11 umfasst also zwei Zuführungssysteme und zwei Abführungssysteme für Elektrolyt. Ein Zuführungssystem und das zugehörige Abführungssystem bilden dabei einen Kreislauf für Elektrolyt. Zur Unterscheidung werden die einzelnen Zuführungssysteme, Abführungssysteme und Kreisläufe mit den Begriffen "negativ" und "positiv" bezeichnet, welche sich auf die Polarität des Elektrolyten in den genannten Elementen beziehen. In jedem Kreislauf ist ein Pumpenlaufrad zum Umwälzen von Elektrolyten vorgesehen. In der Regel sind die Pumpenlaufräder in den Zuführungssystemen angeordnet. Die Drehrichtung der Pumpenlaufräder gibt dabei die Richtung vor, in der Elektrolyt im betreffenden Kreislauf umgewälzt wird. Diese Richtung ist auch dadurch festgelegt, dass die Mündung des Rohrsystems in den Tank für das Zuführungssystem im unteren Bereich des Tanks angeordnet ist, während die Mündung des Rohrsystems in den Tank für das Abführungssystem im oberen Bereich des Tanks angeordnet ist, wie in Figur 1 dargestellt.

Die Messeinrichtung einer erfindungsgemäßen Batterie 11 umfasst wenigstens zwei Elektroden, welche direkt in den Elektrolytkreislaufen angeordnet sind. Dabei ist eine erste Elektrode direkt im negativen Elektrolytkreislauf und eine zweite Elektrode direkt im positiven Elektrolytkreislauf angeordnet. Die Elektroden sind also im Kontakt mit dem Elektrolyten und erlauben es ein Potential abzugreifen, welches den Zustand des Elektrolyten charakterisieren kann. Figur 1 zeigt insgesamt sechs solche Elektroden. Dabei ist eine Elektrode mit 1 bezeichnet und direkt im Rohrsystem des negativen Zuführungssystems angeordnet. Eine weitere Elektrode ist mit 2 bezeichnet und direkt im Rohrsystem des negativen Abführungssystems angeordnet. Eine weitere Elektrode ist mit 3 bezeichnet und direkt im Rohrsystem des positiven Zuführungssystems angeordnet. Eine weitere Elektrode ist mit 4 bezeichnet und direkt im Rohrsystem des positiven Abführungssystems angeordnet. Eine weitere Elektrode ist mit 5 bezeichnet und direkt im Tank 14 des negativen Zuführungssystems angeordnet. Eine weitere Elektrode ist mit 6 bezeichnet und direkt im Tank 13 des positiven Zuführungssystems angeordnet. Durch den Ausdruck "direkt" wird dabei jeweils ausgedrückt, dass die entsprechenden Elektroden unmittelbar in den genannten Elementen angeordnet und nicht wie aus dem Stand der Technik bekannt in separaten Messzellen angeordnet sind, welche über Abzweigungsleitungen mit den Elektrolytkreisläufen verbunden sind.

Wie weiter unten noch näher beschrieben wird, besteht erfindungsgemäß das Messsignal, welches ein Maß für den Ladezustand der Batterie darstellt, aus einer Spannungsdifferenz zwischen der ersten und der zweiten Elektrode. Die Voraussetzung dafür ist, dass es für die betreffenden Potentiale der beiden Elektrolytkreisläufe ein definiertes Bezugspotential gibt. Mit anderen Worten die beiden Elektrolytkreisläufe dürfen elektrisch betrachtet nicht gegeneinander floaten. Erfindungsgemäß wird dies dadurch erreicht, dass die beiden Elektrolytkreisläufe durch eine hydraulische Verbindungsleitung elektrisch miteinander verbunden sind, welche im nächsten Abschnitt näher schrieben wird.

Eine erfindungsgemäße Batterie 11 umfasst eine hydraulische Verbindungsleitung, welche die Elektrolytflüssigkeit in den beiden Tanks 13 und 14 permanent elektrisch miteinanderverbindet. In Figur 1 ist die Verbindungsleitung mit 15 bezeichnet. Da die Wände der Verbindungsleitung 15 aus nicht leitfähigem Material bestehen (wie üblicherweise alle elektrolytflüssigkeitsführenden Rohre in gattungsgemäßen Redox-Flow Batterien), kommt die elektrische Verbindung durch die Elektrolytflüssigkeit zustande, welche sich in der Verbindungsleitung 15 befindet, da die elektrolytgefüllte Verbindungsleitung 15 eine Salz- bzw. Ionenbrücke darstellt. Eine solche hydraulische Verbindungsleitung 15 stellt also einen notwendigen Bestandteil der erfindungsgemäßen Messeinrichtung dar. Im Zusammenhang mit Figur 1a werden zwei Varianten von hydraulischen Verbindungsleitungen beschrieben, mit welchen die für die Messeinrichtung notwendige elektrische Verbindung der Elektrolytkreisläufe bewerkstelligt werden kann.

Hydraulische Verbindungsleitungen zwischen den beiden Tanks einer Redox-Flow Batterie sind aus dem Stand der Technik bekannt. So offenbart beispielsweise die WO 2022 / 033 750 A1 eine solche hydraulische Verbindungsleitung (siehe Figur 5). Die offenbarte hydraulische Verbindungsleitung mündet oberhalb von den Elektrolytspiegeln in die Tanks und dient dazu, einen Austausch von Elektrolytflüssigkeit zwischen den beiden Tanks zu ermöglichen, wenn die Menge an Elektrolytflüssigkeit in den beiden Tanks sich voneinander unterscheidet. In der WO 2022 / 033 750 A1 kommen die unterschiedlichen Mengen beim Durchmischen der Elektrolytflüssigkeit zustande. Auch im normalen Betrieb einer Redox-Flow Batterie kann es durch ein sogenanntes "Cross Over" in der Zellanordnung dazu kommen, dass sich die Mengen von Elektrolytflüssigkeit in den beiden Tanks mit der Zeit voneinander unterscheiden. Auch für diesen Fall können hydraulische Verbindungsleitungen, wie in der WO 2022 / 033 750 A1 offenbart, dafür vorgesehen sein, die Niveaus in den beiden Tanks wieder auszugleichen, wenn sich dieselben über ein vorbestimmtes Maß gegeneinander verschoben haben. Solche bekannten hydraulischen Verbindungsleitungen ermöglichen daher nur zeitweise (d.h. nicht permanent) eine elektrische Verbindung der Elektrolytkreisläufe. Da eine solche elektrische Verbindung im Prinzip zu einer unerwünschten Entladung der Redox-Flow Batterie führt, sind bei herkömmlichen Redox-Flow Batterien z.T. Absperrventile in solchen hydraulischen Verbindungsleitungen vorgesehen, um eine solche Entladung aktiv verhindern zu können.

Figur 1a zeigt zwei Varianten für erfindungsgemäße hydraulische Verbindungsleitungen. Im unteren Bereich der Figur 1a ist die hydraulische Verbindungsleitung so ausgeführt, dass die beiden Mündungen in den Tanks jeweils komplett unterhalb des Elektrolytspiegels angeordnet sind. Daher ist die gesamte hydraulische Verbindungsleitung permanent mit Elektrolytflüssigkeit gefüllt. Vorteilhaft wird in dieser Variante der Rohrquerschnitt der hydraulischen Verbindungsleitung klein gehalten, so dass durch die hydraulische Verbindungsleitung kaum ein Austausch an Elektrolytflüssigkeit stattfindet. Der durch die hydraulische Verbindungsleitung fließende Strom ist dann auch vernachlässigbar klein, da die elektrische Verbindung hochohmig ist. In der Regel genügen kleine Rohrdurchmesser auch, um die durch Cross Over verursachten Ungleichheiten der Elektrolytflüssigkeiten auszugleichen. In der oben in Figur 1a gezeigten Variante ist die hydraulische Verbindungsleitung so ausgeführt, dass die beiden Mündungen in den Tanks nur teilweise unterhalb des Elektrolytspiegels angeordnet sind. Daher ist die hydraulische Verbindungsleitung nur teilweise permanent mit Elektrolytflüssigkeit gefüllt. Auch eine nur teilweise Füllung mit Elektrolytflüssigkeit genügt, um eine permanente elektrische Verbindung herzustellen. Dazu muss die hydraulische Verbindungsleitung ausreichend genau horizontal verlaufen. In dieser Variante kann die Verbindungsleitung auch einen großen Querschnitt haben, da die Verbindungsleitung nur teilweise mit Elektrolytflüssigkeit gefüllt ist, so dass auch in diesem Fall eine hochohmige elektrische Verbindung vorliegt. Daher kann eine solche Verbindungsleitung auch vorteilhaft für das Durchmischen der Elektrolytflüssigkeiten in den Tanks eingesetzt werden (wie in der WO 2022 / 033 750 A1 beschrieben).

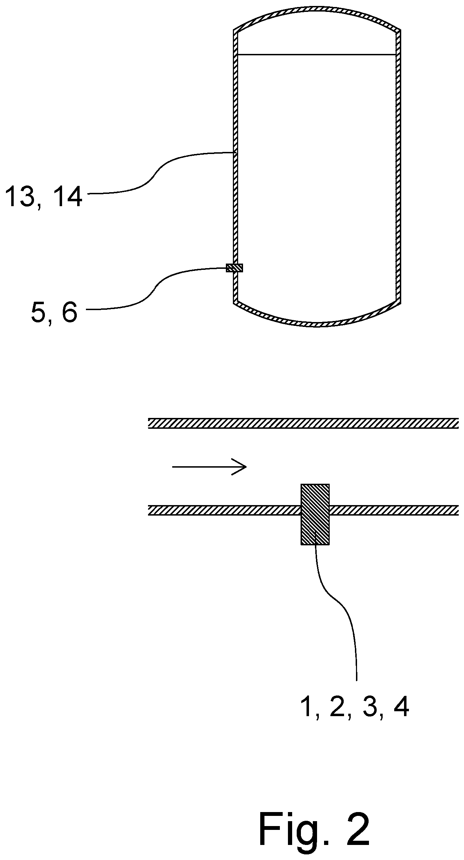

Figur 2 zeigt die Anordnung der Elektroden im Detail. Im oberen Teil der Figur ist eine Elektrode in einem Tank angeordnet. Die Elektrode durchdringt die Tank-Wand. Im unteren Teil der Figur ist eine Elektrode in einem Rohrsystem angeordnet. Die Elektrode durchdringt die Wand des Rohrsystems. Dabei sind die Wände aus nichtleitendem Material hergestellt. Alternativ können die Elektroden komplett im Inneren der betreffenden Elemente (Tank oder Rohrsystem) angeordnet sein. Dann führt eine elektrische Leitung von den Elektroden durch die Wände der betreffenden Elemente in den Außenraum.

Es ist von Vorteil, wenn die Elektroden in den beiden Kreisläufen ungefähr gleich angeordnet sind. D.h. unter Bezugnahme zu Figur 1: Wenn im negativen Kreislauf die erste Elektrode wie die Elektrode 1 angeordnet ist, dann soll im positiven Kreislauf die zweite Elektrode wie die Elektrode 3 angeordnet sein. Wenn im negativen Kreislauf die erste Elektrode wie die Elektrode 2 angeordnet ist, dann soll im positiven Kreislauf die zweite Elektrode wie die Elektrode 4 angeordnet sein. Wenn im negativen Kreislauf die erste Elektrode wie die Elektrode 5 angeordnet ist, dann soll im positiven Kreislauf die zweite Elektrode wie die Elektrode 6 angeordnet sein. Kleinere Abweichungen von der optimalen Anordnung Elektroden spielen jedoch keine entscheidende Rolle.

Die beiden Elektroden dienen zur Bereitstellung eines Messsignals, welches ein Maß für den Ladezustand SoC der Batterie 11 darstellt. Das Messsignal besteht in einer Spannungsdifferenz zwischen der ersten und der zweiten Elektrode. Zur Erfassung dieser Spannungsdifferenz dient eine Steuereinrichtung, welche in Figur 1 mit 16 bezeichnet ist. Obwohl die Steuereinrichtung 16 räumlich von der Batterie 11 getrennt angeordnet sein kann, wie in Figur 1 dargestellt, wird dieselbe als ein Teil der Batterie 11 betrachtet. Genauso gut könnte die Steuereinrichtung 16 in die Batterie 11 integriert sein. Wenn die Batterie 11 Teil eines größeren Batterie-Systems ist, kann die Steuereinrichtung 16 in ein übergeordnetes Steuersystem integriert sein. In jedem Fall ist die Steuereinrichtung 16 mit den im Elektrolytkreislauf angeordneten wenigstens zwei Elektroden 1, 2, 3, 4, 5 und/oder 6 verbunden, soweit diese vorhanden sind.

Je nachdem wo die beiden Elektroden angeordnet sind, gibt die Spannungsdifferenz zwischen denselben einen unterschiedlichen Ladezustand an. So repräsentiert die Spannungsdifferenz V₁₃ zwischen den Elektroden 1 und 3 von Figur 1 den Ladezustand des Elektrolyten bevor derselbe in die Zellanordnung 12 eintritt. Entsprechend repräsentiert die Spannungsdifferenz V₂₄ zwischen den Elektroden 2 und 4 den Ladezustand des Elektrolyten, nachdem derselbe die Zellanordnung 12 passiert hat. Entsprechend repräsentiert die Spannungsdifferenz V₅₆ zwischen den Elektroden 5 und 6 den Ladezustand des Elektrolyten in den Tanks 13 und 14.

Wenn die Batterie 11 mehr als eine Elektrode pro Elektrolytkreislauf umfasst, dann können weitere Spannungsdifferenzen gebildet werden, welche zusätzliche Inforationen über den Zustand der Batterie 11 liefern können. Besonders interessant sind die Informationen, die gewonnen werden können, wenn die Batterie 11 die Elektroden 1, 2, 3 und 4 aus Figur 1 umfasst. So repräsentiert die Differenz (V₁₃ - V₂₄) den Unterschied des Ladezustandes des Elektrolyten vor und nach dem Passieren der der Zellanordnung 12. Diese Differenz stellt auch ein Maß für die Flussrate des Elektrolyten durch die Zellanordnung dar. Sie kann daher als Regelsignal für die Pumpenförderrate dienen. Dadurch kann auf Drucksensoren im Elektrolytkreislauf verzichtet werden, welche herkömmlich als Regelsignal für die Pumpenförderrate Verwendung finden. Außerdem stellt die Spannungsdifferenz V₂₁ zwischen den Elektroden 2 und 1 ein Maß für die Konversionsrate der negativen Hälfte der Zellanordnung 12 dar. Entsprechend stellt die Spannungsdifferenz V₄₃ zwischen den Elektroden 4 und 3 ein Maß für die Konversionsrate der positiven Hälfte der Zellanordnung 12 dar. Diese Größen können dazu verwendet werden, um unerwünschte Sekundärreaktionen in der Zellanordnung 12 zu detektieren und Aussagen über die verbleibende Lebensdauer (SoH - State of Health) der Batterie zu gewinnen. Außerdem kann damit die Coulomb Effizienz (CE - Coulomb Efficiency) der Zellanordnung 12 abgeschätzt werden.

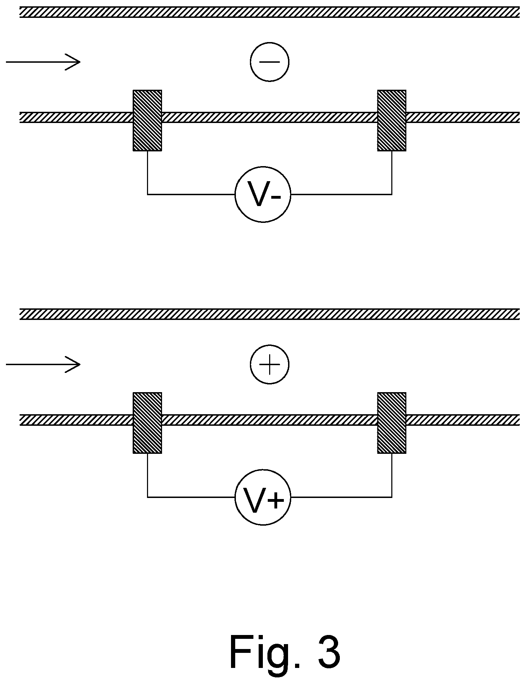

Wenn jeweils mehr als zwei Elektroden in den Elektrolytkreisläufen angeordnet sind, dann können dieselben auch dazu verwendet werden, um ein Ungleichgewicht zwischen dem negativen und positiven Elektrolyten in Bezug auf den jeweiligen Ladezustand zu detektieren. Unter welchen Bedingungen dies möglich ist, wird anhand von Figur 3 näher erläutert. Figur 3 zeigt oben einen Teil des negativen Elektrolytkreislauf und unten einen Teil des positiven Elektrolytkreislauf. Die Pfeile zeigen dabei die Flussrichtung des Elektrolyten an. In jedem Teil sind zwei Elektroden angeordnet, wobei eine der Elektroden in Flussrichtung oberhalb und die andere in Flussrichtung unterhalb angeordnet ist. Die hydraulische Weglänge zwischen den beiden Elektroden ist als Pfadlänge definiert, die der Elektrolyt beim Strömen von der oberhalb gelegenen Elektrode zur unterhalb gelegenen Elektrode zurücklegt. Zwischen den beiden zum gleichen Kreislauf gehörigen Elektroden wird jeweils eine Spannung abgegriffen: V- und V+. Wenn V- von V+ abweicht, dann deutet das auf ein Ungleichgewicht bzgl. des Ladezustandes der beiden Elektrolyten hin. Dazu muss jedoch die hydraulische Weglänge zwischen den beiden Elektroden in beiden Kreisläufen möglichst gleich groß sein. Außerdem darf die Zellanordnung 12 nicht im hydraulischen Weg zwischen den beiden Elektroden angeordnet sein. D.h. unter Bezugnahme auf Figur 1 könnten für ein solche Auswertung die Elektroden 5 und 1 und 6 und 3 oder die Elektroden 2 und 5 und 4 und 6 verwendet werden. Es könnten jedoch nicht die Elektroden 1 und 2 und 3 und 4 verwendet werden, da in diesem Fall die Zellanordnung 12 im hydraulischen Weg zwischen den Elektrodenpaaren angeordnet ist. Besonders leicht lässt sich die Bedingung der gleichen hydraulischen Weglänge zwischen den Elektrodenpaaren dann erfüllen, wenn alle beteiligen Elektroden im Tank angeordnet werden.

In der Anordnung von Figur 3 kann jeweils eine der Elektroden pro Elektrolytkreislauf als sogenannte Arbeitselektrode und die andere Elektrode als Referenzelektrode betrachtet werden. V- und V+ stellen dann jeweils die Differenz des Potentials zwischen Arbeits- und Referenzelektrode dar. Das ist insbesondere dann von Bedeutung, wenn mehr als zwei Elektroden pro Elektrolytkreislauf verwendet werden. Dann gibt es pro Elektrolytkreislauf genau eine Referenzelektrode und mehr als eine Arbeitselektrode, und die Potentialdifferenzen werden jeweils in Relation von einer Arbeitselektrode zur Referenzelektrode gebildet. Es ist klar, dass dabei die Elektroden in den einzelnen Elektrolytkreisläufen an äquivalenten Stellen angeordnet sind.

Zusammenfassend lässt sich also sagen, dass sich mit Hilfe von jeweils einer Elektrode pro Elektrolytkreislauf ein Maß für den Ladezustand SoC der Batterie gewinnen lässt. Mit mehr als einer Elektrode pro Elektrolytkreislauf lassen sich darüber hinaus noch weitere interessante Kenngrößen der Batterie bestimmen bzw. abschätzen.

Als Material für die Elektroden kommt Kohlenstoff in Frage. Es könnte sich beispielsweise um Grafit oder um Glaskohlenstoff handeln. Auch leitfähige Kunststoffe kommen als Material in Frage. Wenn es sich bei der Redox-Flow Batterie um eine Batterie auf der Basis von Vanadium handelt, dann ist es von Vorteil, wenn die Elektroden ebenfalls auf Vanadium als Material basieren. Dabei könnte es sich um einen Kunststoff handeln, welcher Vanadiumoxid (d.h. beispielsweise V₂O₅) und Kohlenstoff als aktives Material umfasst.

Das erfindungsgemäße Verfahren zur Bestimmung des Ladezustandes SoC der Batterie 11 umfasst folgende Schritte:
- Erfassen der elektrischen Spannung an der ersten Elektrode
- Erfassen der elektrischen Spannung an der zweiten Elektrode
- Berechnung der Spannungsdifferenz der in den beiden vorangehenden Schritten erfassten Spannung

Dabei ist wie oben beschrieben die erste Elektrode im negativen Elektrolytkreislauf und die zweite Elektrode im positiven Elektrolytkreislauf angeordnet.

Zur Bestimmung von weiteren Kenngrößen der Batterie umfasst dieselbe wenigstens vier Elektroden, wobei jeweils wenigstens zwei Elektroden im negativen und wenigstens zwei Elektroden im positiven Elektrolytkreislauf angeordnet sind. Das erfindungsgemäße Verfahren umfasst dann zusätzlich die folgenden Schritte:
- Erfassen der elektrischen Spannung an zwei Elektroden des negativen Elektrolytkreislaufes
- Erfassen der elektrischen Spannung an zwei Elektroden des positiven Elektrolytkreislaufes
- Berechnung der Spannungsdifferenzen der in den beiden vorangehenden Schritten erfassten Spannungen separat für jeden Elektrolytkreislauf

Die Erfinder haben erkannt, dass sich die Zuverlässigkeit der Bestimmung des Ladezustandes SoC der Batterie statistisch dadurch erhöhen lässt, dass mehrere Methoden zur Bestimmung des SoC kombiniert werden. So kann der, wie oben beschrieben, erfindungsgemäß bestimmte Wert für den Ladezustand SoC dadurch präzisiert werden, dass aus den Spannungsdifferenzen V- und/oder V+ der Ladezustand des betreffenden Elektrolytkreislaufes bestimmt wird. Eine weitere Kombinationsmöglichkeit besteht darin, dass der Ladezustand der Batterie zusätzlich über die Klemmenspannung der Batterie abgeschätzt wird. Dazu umfasst die Batterie optional eine Messeinrichtung zur Erfassung der Klemmenspannung. Eine solche Messeinrichtung ist in Figur 1 mit 17 bezeichnet. Zur Abschätzung des Ladezustandes SoC mit Hilfe der Klemmenspannung werden folgende Schritte ausgeführt:
- Stromlos Schalten der Zellanordnung
- Nachdem eine vordefinierte Zeitspanne verstrichen ist, Erfassen der Klemmenspannung
- Division der Klemmenspannung durch die Anzahl der seriell angeordneten Zellen der Zellanordnung

Das stromlos Schalten der Zellanordnung bedeutet, dass die Batterie ab diesem Schritt nicht geladen oder entladen wird. Die vordefinierte Zeitspanne, die dann in diesem Zustand verstrichen sein muss, hängt davon ab mit welcher Flussrate die Pumpen gerade betrieben werden und wie groß das Elektrolytvolumen der Zellanordnung ist. Wenn das Volumen der Zellanordnung komplett mit frischem Elektrolyten gefüllt wurde, stellt sich ein Zustand ein, in dem die Klemmenspannung der Leerlaufspannung multipliziert mit Anzahl der seriell angeordneten Zellen der Zellanordnung entspricht.

Durch eine Kombination mit weiteren bekannten Methoden zur Bestimmung des Ladezustands kann die Zuverlässigkeit weiter gesteigert werden. Solche bekannten Methoden sind beispielsweise das sogenannte "Coulomb Counting" oder die Bestimmung des Ladezustandes mit optischen Sensoren (vgl. beispielsweise die DE 10 2016 117 604 A1).

### Bezugszeichenliste

- 1: Elektrode
- 2: Elektrode
- 3: Elektrode
- 4: Elektrode
- 5: Elektrode
- 6: Elektrode
- 11: Redox-Flow Batterie
- 12: Zellanordnung
- 13: Tank
- 14: Tank
- 15: Hydraulische Verbindungsleitung
- 16: Steuereinrichtung
- 17: Messeinrichtung zur Erfassung der Klemmenspannung

## Patentansprüche

1. Redox-Flow Batterie (11) umfassend eine Zellanordnung (12) mit zwei Eingänge und zwei Ausgängen für Elektrolyt, einen ersten Tank (13) zum Speichern von positiver Elektrolytflüssigkeit, einen zweiten Tank (14) zum Speichern von negativer Elektrolytflüssigkeit, zwei erste Rohrsysteme zwischen den Tanks (13, 14) und den Eingängen der Zellanordnung (12), zwei zweite Rohrsysteme zwischen den Tanks (13, 14) und den Ausgängen der Zellanordnung (12), wobei die Tanks (13, 14) und die ersten Rohrsysteme zwei Zuführungssysteme bilden, und wobei die zweiten Rohrsysteme zwei Abführungssysteme bilden, und wobei je ein Zuführungssystem und je ein Abführungssystem einen negativen Elektrolytkreislauf und je ein Zuführungssystem und je ein Abführungssystem einen positiven Elektrolytkreislauf bilden, und wobei in jedem Elektrolytkreislauf ein Pumpenlaufrad zum Umwälzen des Elektrolyten angeordnet ist, und wobei die Redox-Flow Batterie (11) eine Messeinrichtung zur Bestimmung des Ladezustandes umfasst, **dadurch gekennzeichnet, dass** die Messeinrichtung zur Bestimmung des Ladezustandes eine hydraulische Verbindungsleitung (15) umfasst, welche den ersten Tank (13) mit dem zweiten Tank (14) so verbindet, dass zwischen den Elektrolytflüssigkeiten in den beiden Tanks (13, 14) eine permanente elektrische Verbindung besteht, wobei die elektrische Verbindung durch Elektrolytflüssigkeit zustande kommt, welche sich in der hydraulischen Verbindungsleitung (15) befindet, und wobei die Messeinrichtung wenigstens zwei Elektroden (1, 2, 3, 4, 5, 6) umfasst, und wobei eine erste Elektrode (3, 4, 6) direkt im positiven Elektrolytkreislauf angeordnet ist, und wobei eine zweite Elektrode (1, 2, 5) direkt im negativen Elektrolytkreislauf angeordnet ist, und wobei die Redox-Flow Batterie (11) eine Steuereinrichtung (16) umfasst, welche so ausgebildet ist, dass sie eine Spannungsdifferenz zwischen zwei Elektroden (1, 2, 3, 4, 5, 6) erfassen kann.

2. Redox-Flow Batterie (11) nach Anspruch 1, wobei die Elektroden (1, 3, 5, 6) direkt in den Zuführungssystemen angeordnet sind.

3. Redox-Flow Batterie (11) nach Anspruch 2, wobei die Elektroden (1, 3) direkt in den Rohrsystemen der Zuführungssysteme angeordnet sind.

4. Redox-Flow Batterie (11) nach Anspruch 2, wobei die Elektroden (5, 6) direkt in den Tanks (13, 14) angeordnet sind.

5. Redox-Flow Batterie (11) nach Anspruch 1, wobei die Elektroden (1, 3, 5, 6) direkt in den Abführungssystemen angeordnet sind.

6. Redox-Flow Batterie (11) nach einem der vorherigen Ansprüche, wobei die Redox-Flow Batterie (11) mehr als eine Elektrode (1, 2, 3, 4, 5, 6) pro Elektrolytkreislauf umfasst.

7. Redox-Flow Batterie (11) nach Anspruch 6, wobei jeweils eine Elektrode (1, 3, 5, 6) direkt in den Zuführungssystemen und jeweils eine Elektrode (2, 4) direkt in den Abführungssystemen angeordnet ist.

8. Redox-Flow Batterie (11) nach Anspruch 7, wobei jeweils eine Elektrode (1, 3) direkt in den Rohrsystemen der Zuführungssysteme angeordnet ist.

9. Redox-Flow Batterie (11) nach einem der Ansprüche 6 bis 8, wobei die Steuereinrichtung (16) so ausgebildet ist, dass sie eine Spannungsdifferenz zwischen zwei Elektroden (1, 2, 3, 4, 5, 6) erfassen kann, welche im selben Elektrolytkreislauf angeordnet sind.

10. Redox-Flow Batterie (11) nach einem der vorherigen Ansprüche, wobei die Redox-Flow Batterie (11) eine Messeinrichtung (17) zur Erfassung einer Klemmenspannung umfasst.

11. Verfahren zum Betrieb einer Redox-Flow Batterie (11) nach einem der Ansprüche 1 bis 5 umfassend die folgenden Schritte:
- Erfassen der elektrischen Spannung an der ersten Elektrode (3, 4, 6);
- Erfassen der elektrischen Spannung an der zweiten Elektrode (1, 2, 5);
- Berechnung der Spannungsdifferenz der in den beiden vorangehenden Schritten erfassten Spannung;
wobei die Spannungsdifferenz ein Maß für den Ladezustand der Batterie darstellt.

12. Verfahren zum Betrieb einer Redox-Flow Batterie (11) nach einem der Ansprüche 6 bis 10 umfassend die folgenden Schritte:
- Erfassen der elektrischen Spannung an zwei Elektroden des negativen Elektrolytkreislaufes;
- Erfassen der elektrischen Spannung an zwei Elektroden des positiven Elektrolytkreislaufes;
- Berechnung der Spannungsdifferenzen der in den beiden vorangehenden Schritten erfassten Spannungen separat für jeden Elektrolytkreislauf.

13. Verfahren nach Anspruch 11 zum Betrieb einer Redox-Flow Batterie (11) nach Anspruch 10 umfassend die folgenden Schritte:
- Stromlos Schalten der Zellanordnung (12);
- Nachdem eine vordefinierte Zeitspanne verstrichen ist, Erfassen der Klemmenspannung;
- Division der Klemmenspannung durch die Anzahl der seriell angeordneten Zellen der Zellanordnung (12);
wobei der im letztgenannten Schritt erhaltene Quotient ein Maß für den Ladezustand der Batterie darstellt.

## Claims

1. Redox flow battery (11) comprising a cell assembly (12) with two inlets and two outlets for electrolyte, a first tank (13) for storing positive electrolyte liquid, a second tank (14) for storing negative electrolyte liquid, two first pipe systems between the tanks (13, 14) and the inlets of the cell assembly (12), two second pipe systems between the tanks (13, 14) and the outlets of the cell assembly (12), wherein the tanks (13, 14) and the first pipe systems form two supply systems, and wherein the second pipe systems form two discharge systems, and wherein a respective supply system and a respective discharge system form a negative electrolyte circuit and a respective supply system and a respective discharge system form a positive electrolyte circuit, and wherein a pump impeller for circulating the electrolyte is arranged in each electrolyte circuit, and wherein the redox flow battery (11) comprises a measuring device for determining the state of charge, **characterized in that** the measuring device for determining the state of charge comprises a hydraulic connecting line (15) which connects the first tank (13) to the second tank (14) in such a way that there is a permanent electrical connection between the electrolyte liquids in the two tanks (13, 14), wherein the electrical connection is established by electrolyte liquid which is disposed in the hydraulic connecting line (15), and wherein the measuring device comprises at least two electrodes (1, 2, 3, 4, 5, 6), and wherein a first electrode (3, 4, 6) is arranged directly in the positive electrolyte circuit and a second electrode (1, 2, 5) is arranged directly in the negative electrolyte circuit, and wherein the redox flow battery (11) comprises a control device (16) which is adapted to detect a voltage difference between two electrodes (1, 2, 3, 4, 5, 6).

2. Redox flow battery (11) according to claim 1, wherein the electrodes (1, 3, 5, 6) are arranged directly in the supply systems.

3. Redox flow battery (11) according to claim 2, wherein the electrodes (1, 3) are arranged directly in the pipe systems of the supply systems.

4. Redox flow battery (11) according to claim 2, wherein the electrodes (5, 6) are arranged directly in the tanks (13, 14).

5. Redox flow battery (11) according to claim 1, wherein the electrodes (1, 3, 5, 6) are arranged directly in the discharge systems.

6. Redox flow battery (11) according to any one of the preceding claims, wherein the redox flow battery (11) comprises more than one electrode (1, 2, 3, 4, 5, 6) per electrolyte circuit.

7. Redox flow battery (11) according to claim 6, wherein respectively one electrode (1, 3, 5, 6) is arranged directly in the supply systems and respectively one electrode (2, 4) is arranged directly in the discharge systems.

8. Redox flow battery (11) according to claim 7, wherein respectively one electrode (1, 3) is arranged directly in the pipe systems of the supply systems.

9. Redox flow battery (11) according to any one of claims 6 to 8, wherein the control device (16) is adapted to detect a voltage difference between two electrodes (1, 2, 3, 4, 5, 6) which are arranged in the same electrolyte circuit.

10. Redox flow battery (11) according to any one of the preceding claims, wherein the redox flow battery (11) comprises a measuring device (17) for detecting a terminal voltage.

11. Method for operating a redox flow battery (11) according to any one of claims 1 to 5, comprising the following steps:
- detecting the electrical voltage at the first electrode (3, 4, 6);
- detecting the electrical voltage at the second electrode (1, 2, 5);
- calculating the voltage difference of the voltage detected in the two preceding steps;
wherein the voltage difference is a measure of the state of charge of the battery.

12. Method for operating a redox flow battery (11) according to any one of claims 6 to 10, comprising the following steps:
- detecting the electrical voltage at two electrodes of the negative electrolyte circuit;
- detecting the electrical voltage at two electrodes of the positive electrolyte circuit;
- calculating the voltage differences of the voltages detected in the two preceding steps separately for each electrolyte circuit.

13. Method according to claim 11 for operating a redox flow battery (11) according to claim 10, comprising the following steps:
- switching off the power to the cell assembly (12);
- detecting the terminal voltage after a predefined period of time has elapsed;
- dividing the terminal voltage by the number of serially arranged cells in the cell assembly (12);
wherein the quotient obtained in the last-mentioned step represents a measure of the state of charge of the battery.

## Revendications

1. Batterie redox à circulation (11) comprenant un agencement de cellules (12) avec deux entrées et deux sorties d'électrolyte, un premier réservoir (13) pour emmagasiner du liquide électrolytique positif, un deuxième réservoir (14) pour emmagasiner du liquide électrolytique négatif, deux premiers systèmes de tuyauterie entre les réservoirs (13, 14) et les entrées de l'agencement de cellules (12), deux deuxièmes systèmes de tuyauterie entre les réservoirs (13, 14) et les sorties de l'agencement de cellules (12), dans laquelle les réservoirs (13, 14) et les premiers systèmes de tuyauterie forment deux systèmes d'alimentation, et dans laquelle les deuxièmes systèmes de tuyauterie forment deux systèmes d'évacuation, et dans laquelle un système d'alimentation respectif et un système d'évacuation respectif forment un circuit d'électrolyte négatif et un système d'alimentation respectif et un système d'évacuation respectif forment un circuit d'électrolyte positif, et dans laquelle un rouet de pompe pour faire circuler l'électrolyte est disposé dans chaque circuit d'électrolyte, et dans laquelle la batterie redox à circulation (11) comprend un dispositif de mesure pour déterminer l'état de charge, **caractérisée en ce que** le dispositif de mesure pour déterminer l'état de charge comprend une conduite de raccordement hydraulique (15) qui relie le premier réservoir (13) au deuxième réservoir (14) de telle sorte qu'il existe une liaison électrique permanente entre les liquides électrolytiques dans les deux réservoirs (13, 14), la liaison électrique étant établie par du liquide électrolytique qui se trouve dans la conduite de raccordement hydraulique (15), et dans laquelle le dispositif de mesure comprend au moins deux électrodes (1, 2, 3, 4, 5, 6), et dans laquelle une première électrode (3, 4, 6) est disposée directement dans le circuit d'électrolyte positif, et dans laquelle une deuxième électrode (1, 2, 5) est disposée directement dans le circuit d'électrolyte négatif, et dans laquelle la batterie redox à circulation (11) comprend un dispositif de commande (16) qui est conçu de manière à pouvoir détecter une différence de tension entre deux électrodes (1, 2, 3, 4, 5, 6).

2. Batterie redox à circulation (11) selon la revendication 1, dans laquelle les électrodes (1, 3, 5, 6) sont disposées directement dans les systèmes d'alimentation.

3. Batterie redox à circulation (11) selon la revendication 2, dans laquelle les électrodes (1, 3) sont disposées directement dans les systèmes de tuyauterie des systèmes d'alimentation.

4. Batterie redox à circulation (11) selon la revendication 2, dans laquelle les électrodes (5, 6) sont disposées directement dans les réservoirs (13, 14).

5. Batterie redox à circulation (11) selon la revendication 1, dans laquelle les électrodes (1, 3, 5, 6) sont disposées directement dans les systèmes d'évacuation.

6. Batterie redox à circulation (11) selon l'une des revendications précédentes, dans laquelle la batterie redox à circulation (11) comprend plus d'une électrode (1, 2, 3, 4, 5, 6) par circuit d'électrolyte.

7. Batterie redox à circulation (11) selon la revendication 6, dans laquelle respectivement une électrode (1, 3, 5, 6) est disposée directement dans les systèmes d'alimentation et respectivement une électrode (2, 4) est disposée directement dans les systèmes d'évacuation.

8. Batterie redox à circulation (11) selon la revendication 7, dans laquelle respectivement une électrode (1, 3) est disposée directement dans les systèmes de tuyauterie des systèmes d'alimentation.

9. Batterie redox à circulation (11) selon l'une des revendications 6 à 8, dans laquelle le dispositif de commande (16) est conçu de manière à pouvoir détecter une différence de tension entre deux électrodes (1, 2, 3, 4, 5, 6) qui sont disposées dans le même circuit d'électrolyte.

10. Batterie redox à circulation (11) selon l'une des revendications précédentes, dans laquelle la batterie redox à circulation (11) comprend un dispositif de mesure (17) pour détecter une tension aux bornes.

11. Procédé de fonctionnement d'une batterie redox à circulation (11) selon l'une des revendications 1 à 5, comprenant les étapes suivantes :
- détection de la tension électrique au niveau de la première électrode (3, 4, 6) ;
- détection de la tension électrique au niveau de la deuxième électrode (1, 2, 5) ;
- calcul de la différence de tension de la tension détectée lors des deux étapes précédentes ;
dans lequel la différence de tension représente une mesure de l'état de charge de la batterie.

12. Procédé de fonctionnement d'une batterie redox à circulation (11) selon l'une des revendications 6 à 10, comprenant les étapes suivantes :
- détection de la tension électrique au niveau de deux électrodes du circuit d'électrolyte négatif ;
- détection de la tension électrique au niveau de deux électrodes du circuit d'électrolyte positif ;
- calcul des différences de tension des tensions détectées lors des deux étapes précédentes séparément pour chaque circuit d'électrolyte.

13. Procédé selon la revendication 11 de fonctionnement d'une batterie redox à circulation (11) selon la revendication 10, comprenant les étapes suivantes :
- mise hors tension de l'agencement de cellules (12) ;
- après qu'une durée prédéfinie s'est écoulée, détection de la tension aux bornes ;
- division de la tension aux bornes par le nombre de cellules disposées en série de l'agencement de cellules (12) ;
dans lequel le quotient obtenu lors de la dernière étape citée représente une mesure de l'état de charge de la batterie.
